# DEMANDE DE BREVET EUROPEEN

(11) **EP 3 352 144 A1**
(43) Date de publication de la demande: **25.07.2018**
(21) Numéro de dépôt: 18151850.7
(22) Date de dépôt: 16.01.2018
(51) Int. Cl.: G07D 7/0043

(54) **PROCEDE ET DISPOSITIF DE VERIFICATION DE LA VALIDITE D'UN DOCUMENT ELECTRONIQUE**

(30) Priorité: 18.01.2017 FR 1750378
(71) Demandeur: Idemia Identity & Security France, 92130 Issy-les-Moulineaux (FR)
(72) Inventeur: RIEUL, François, 92130 Issy les Moulineaux (FR)
(74) Mandataire: Cabinet Le Guen Maillet

(57) **Abrégé**

L'invention concerne un procédé et un dispositif de vérification de la validité d'un document électronique dans lequel :
- on active (E700) un dispositif de capture d'images et capture d'une séquence d'images affichée par un dispositif de présentation du document électronique, la séquence d'images étant constituée de différents codes à barres à deux dimensions affichés successivement les uns après les autres, les code à barres à deux dimensions étant représentatifs d'une signature du document électronique et de parties du document électronique,
- on décode (E703) les codes à barres à deux dimensions,
- on vérifie (E706) la validité de la signature à l'aide d'une clé publique,
- on génère (E707, E708) un message représentatif du résultat de la vérification.

## Description

La présente invention concerne un procédé et un dispositif de vérification de la validité d'un document électronique.

L'utilisation de documents électroniques tels que des titres de transport, notamment par les compagnies aériennes ainsi que dans les transports en commun terrestres et maritimes tend à se développer de nos jours.

Ces documents électroniques sont des documents dématérialisés qui remplacent un support d'information matériel tel que du papier par des informations numériques.

Un document numérique est une forme de représentation de l'information consultable à l'écran d'un appareil électronique.

Les documents électroniques sont par exemple mémorisés dans le téléphone intelligent (smartphone en anglais) et affichés sur l'écran du téléphone intelligent si besoin.

Classiquement, un code à barres à deux dimensions, tel que par exemple le code QR, est représenté sur l'écran du téléphone intelligent lors de la présentation du document. Le code QR est un type de code-barres en deux dimensions ou code matriciel constitué de modules noirs disposés dans un carré à fond blanc. L'agencement de ces points définit l'information que contient le code.

Le contenu du code QR peut être décodé rapidement après avoir été lu par un lecteur de code-barres, un téléphone mobile ou un téléphone intelligent.

Un code à barres à deux dimensions ne peut contenir qu'une quantité limitée d'informations. Par exemple un code QR version 25 qui comporte 117x117 pavés permet de mémoriser moins de 2K octets avec un code-correcteur de type L faible ou moins de 1K octets avec un code correcteur type H fort.

Cette capacité de stockage n'est pas adaptée aux documents tels que par exemple les passeports, les permis de conduire qui comportent une photographie du détenteur du document. En effet, la taille d'une photographie est au moins supérieure à une dizaine de kilo-octets pour de tels documents.

La présente invention a pour but de résoudre les problèmes de l'état de la technique en proposant un procédé et un système qui permettent la présentation de documents électroniques comportant une quantité importante de données sous la forme de codes à barres à deux dimensions.

A cette fin, selon un premier aspect, l'invention propose un procédé de vérification de la validité d'un document électronique, caractérisé en ce que le procédé comporte les étapes de :
- activation d'un dispositif de capture d'images et capture d'une séquence d'images affichée par un dispositif de présentation du document électronique, la séquence d'images étant constituée de différents codes à barres à deux dimensions affichés successivement les uns après les autres, les code à barres à deux dimensions étant représentatifs d'une signature du document électronique et de parties du document électronique,
- décodage des codes à barres à deux dimensions,
- vérification de la validité de la signature à l'aide d'une clé publique,
- génération d'un message représentatif du résultat de la vérification.

L'invention concerne aussi un dispositif de vérification de la validité d'un document électronique, caractérisé en ce que le dispositif comporte :
- des moyens d'activation d'un dispositif de capture d'images et capture d'une séquence d'images affichée par un dispositif de présentation du document électronique, la séquence d'images étant constituée de différents codes à barres à deux dimensions affichés successivement les uns après les autres, les code à barres à deux dimensions étant représentatifs d'une signature du document électronique et de parties du document électronique,
- des moyens de décodage des codes à barres à deux dimensions,
- des moyens de vérification de la validité de la signature à l'aide d'une clé publique,
- des moyens de génération d'un message représentatif du résultat de la vérification.

Ainsi, il est possible de transmettre un document électronique comportant une signature électronique du document entre un dispositif de présentation du document électronique et le dispositif de capture d'images sans utiliser un réseau de télécommunication de type filaire ou radio. Un agent de contrôle peut ainsi être informé si le document électronique est valide ou non dans n'importe quel lieu et/ou quelle situation.

Selon un mode particulier de l'invention, la séquence d'image capturée comporte un code à barres à deux dimensions représentatif d'un entête comportant le nombre de codes à barres à deux dimensions représentatifs de la signature du document électronique et du document électronique.

Ainsi, il est possible de vérifier que la totalité des codes à barres à deux dimensions de la séquence de codes à barres à deux dimensions a bien été décodée.

Selon un mode particulier de l'invention, chaque code à barres à deux dimensions est capturé au moins deux fois dans la séquence d'images.

Ainsi, la présente invention garantit que chaque code à barres à deux dimensions est bien capturé par le dispositif de capture d'images.

Selon un mode particulier de l'invention, deux codes à barres différents sont séparés par une image non représentative d'un code à barres à deux dimensions.

Ainsi, il est possible d'identifier simplement quelles images capturées comportent le même code à barres à deux dimensions.

Selon un mode particulier de l'invention, chaque code à barres à deux dimensions comporte un index permettant la reconstruction du document électronique.

Ainsi, il est possible de reconstruire le document électronique.

Selon un mode particulier de l'invention, le dispositif de capture d'images est activé pendant une durée prédéterminée et le décodage est effectué à la fin de la durée prédéterminée.

Ainsi, la présente invention est adaptée aux dispositifs de capture d'images ayant peu de ressources de calcul temps réel.

Selon un mode particulier de l'invention, le dispositif de capture d'images est activé tant que le nombre de codes à barres à deux dimensions décodé est inférieur au nombre compris dans l'entête.

Ainsi, les éventuels mouvements faits par l'utilisateur du dispositif de présentation du document électronique et/ou par l'agent de contrôle ne gênent pas la capture de la séquence de codes à barres à deux dimensions.

Selon un mode particulier de l'invention, le procédé comporte en outre une étape de déchiffrage du document électronique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un exemple de scène dans laquelle le possesseur d'un document électronique présente celui-ci à un agent de contrôle ;
la Fig. 2 représente un exemple d'architecture d'un dispositif de présentation d'un document électronique dans lequel la présente invention est implémentée ;
la Fig. 3 représente un exemple d'architecture d'un dispositif de lecture d'un document électronique dans lequel la présente invention est implémentée ;
la Fig. 4 représente un exemple d'architecture d'un dispositif de génération d'un document électronique dans lequel la présente invention est implémentée ;
la Fig. 5 représente un exemple d'algorithme de génération d'une séquence de codes à barres à deux dimensions selon la présente invention ;
la Fig. 6 représente un exemple d'algorithme de transfert d'une séquence de codes à barres à deux dimensions selon la présente invention ;
la Fig. 7a représente un premier exemple d'algorithme de capture et de traitement d'une séquence de codes à barres à deux dimensions selon la présente invention ;
la Fig. 7b représente un second exemple d'algorithme de capture et de traitement d'une séquence de codes à barres à deux dimensions selon la présente invention ;
la Fig. 8 représente une partie d'une séquence de codes à barres à deux dimensions selon la présente invention.

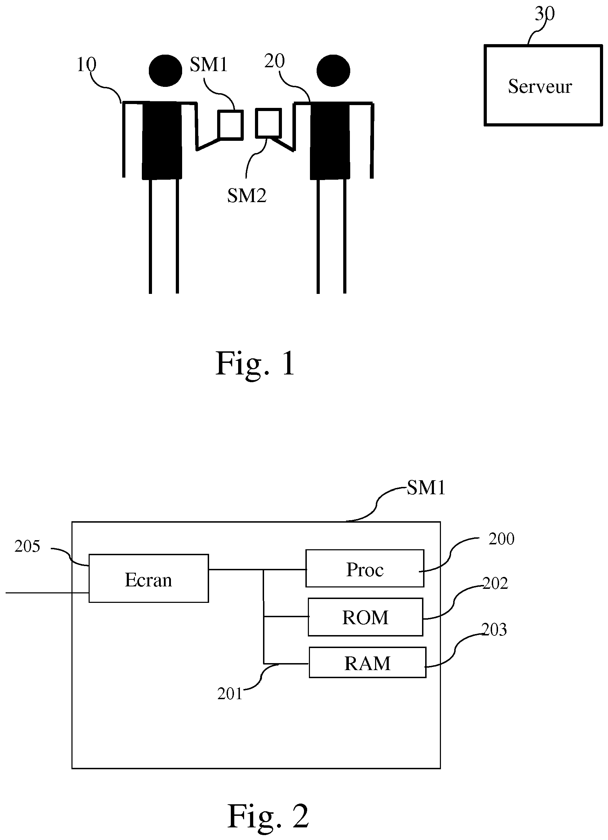

La **Fig. 1** représente un exemple de scène dans laquelle le possesseur d'un document électronique présente celui-ci à un agent de contrôle.

Le possesseur 10 d'un document électronique présente par l'intermédiaire d'un dispositif de présentation d'un document électronique SM1 une séquence de codes à barres à deux dimensions qui représente les données comprises dans le document électronique à un agent de contrôle 20. L'agent de contrôle 20 capture, à l'aide d'un dispositif de lecture d'un document électronique SM2, la séquence de codes à barres à deux dimensions et vérifie la validité des données contenues dans le document électronique.

Le document électronique est par exemple un passeport, une carte d'identité, un permis de conduire ou une licence. Le document électronique est par exemple établi par une autorité qui délivre, par l'intermédiaire d'un serveur 30, le document électronique au dispositif de présentation d'un document électronique SM1 du possesseur 10 du document électronique ainsi qu'une signature du document avec une clé privée. Le document électronique est éventuellement la forme d'une séquence de codes à barres à deux dimensions.

Le document électronique est par exemple constitué d'une photo du possesseur 10 du document électronique, de données relatives au possesseur 10 du document électronique, signé numériquement à l'aide d'une clé privée et est éventuellement encrypté.

Par exemple, la photo du visage du possesseur 10 du document électronique est compressée selon un algorithme de type JPEG ou JPEG2000 pour obtenir une image compressée d'une taille comprise entre 10 et 20 K-octets. Les données relatives au possesseur 10 du document électronique ont par exemple une taille inférieure à 1 k-octets. Les données et la photo du possesseur 10 du document électronique sont signées et comportent une signature associée à l'autorité d'une taille de l'ordre de 1 à 3 K-octets qui permet la vérification d'authenticité du document.

Le dispositif de présentation d'un document électronique SM1 est par exemple un téléphone intelligent, une table tactile, une montre connectée.

L'agent de contrôle 20, à l'aide d'un dispositif de lecture d'un document électronique SM2, capture la séquence de codes à barres à deux dimensions, décode les codes à barres à deux dimensions pour reformer le document électronique et vérifie la validité des données contenues dans le document électronique à l'aide de la signature numérique inclue dans le document électronique et d'une clé publique.

Les clés privée et publique sont par exemple de type RSA.

La séquence de codes à barres à deux dimensions est constituée d'un entête et d'une pluralité de codes à barres à deux dimensions.

Selon la présente invention, la validité d'un document électronique est vérifiée en :
- activant le dispositif de capture d'images pour effectuer une capture d'une séquence d'images affichée par le dispositif de présentation du document électronique, la séquence d'images étant constituée de différents codes à barres à deux dimensions, les code à barres à deux dimensions étant représentatifs d'une signature du document électronique et de parties du document électronique,
- décodant les codes à barres à deux dimensions,
- vérifiant la validité de la signature à l'aide d'une clé publique,
- générant un message représentatif du résultat de la vérification.

La **Fig. 2** représente un exemple d'architecture d'un dispositif de présentation d'un document électronique dans lequel la présente invention est implémentée.

Le dispositif de présentation d'un document électronique SM1 comprend :
- un processeur, micro-processeur, ou microcontrôleur 200 ;
- une mémoire volatile 203 ;
- une mémoire non volatile 202 ;
- un écran 205 ;
- un bus de communication 201 reliant le processeur 200 à la mémoire ROM 202, à la mémoire RAM 203 et à l'écran 205.

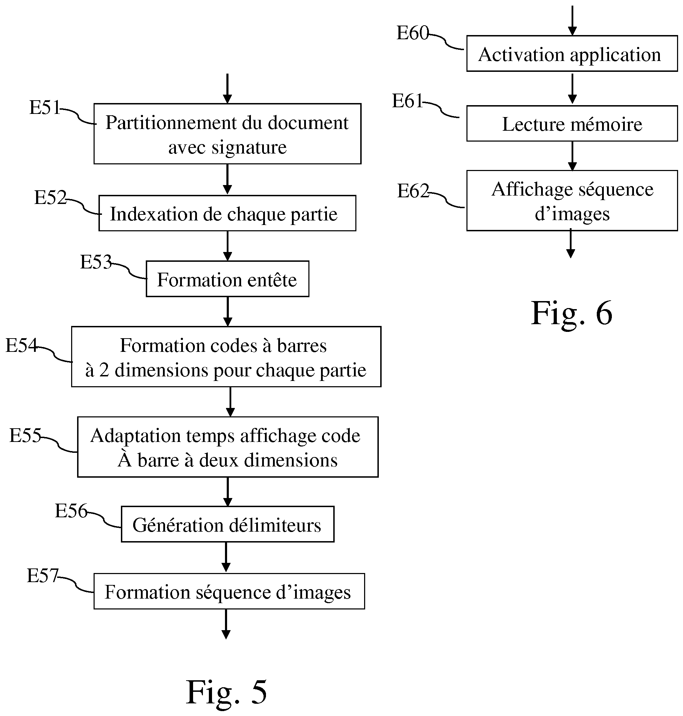

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de présentation d'un document électronique SM1 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 6 voire la Fig. 5.

Tout ou partie du procédé décrit en relation avec la Fig. 6 voire la Fig. 5 peut être implémenté sous forme logicielle par exécution d'un ensemble d'instructions par une machine programmable, tel qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC (« *Application Specific Integrated Circuit »* en anglais ou *Circuit Intégré Spécifique à une Application* en français).

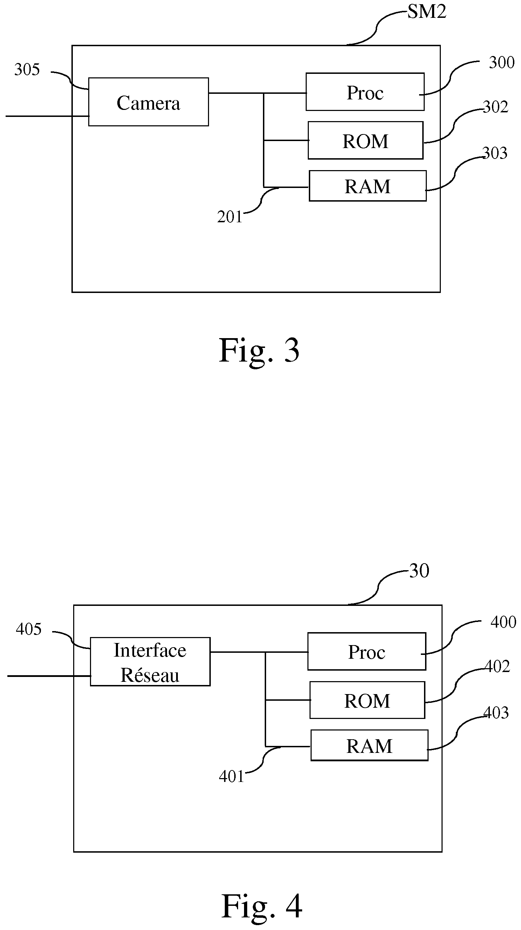

La **Fig. 3** représente un exemple d'architecture d'un dispositif de lecture d'un document électronique dans lequel la présente invention est implémentée.

Le dispositif de lecture d'un document électronique SM2 comprend :
- un processeur, micro-processeur, ou microcontrôleur 300 ;
- une mémoire volatile 303 ;
- une mémoire non volatile 302;
- un dispositif de capture d'images 305 tel qu'une caméra 305 ;
- un bus de communication 301 reliant le processeur 300 à la mémoire ROM 302, à la mémoire RAM 303 et au dispositif de capture d'images 305.

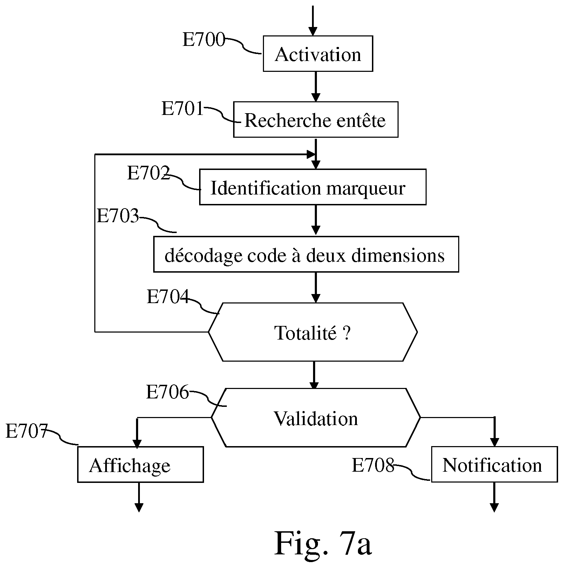

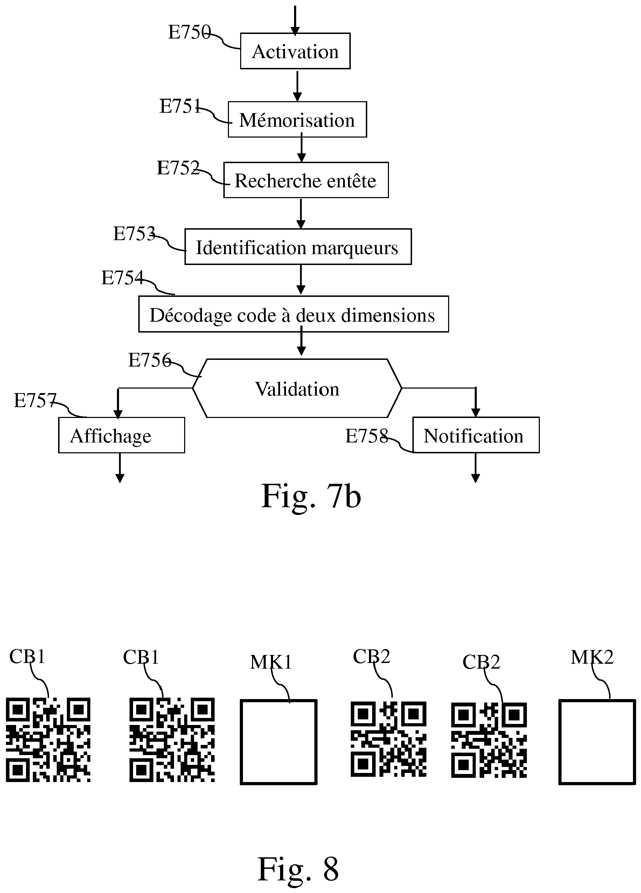

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le dispositif de lecture d'un document électronique SM2 est mis sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec la Fig. 7a ou 7b.

Tout ou partie du procédé décrit en relation avec la Fig. 7a ou 7b peut être implémenté sous forme logicielle par exécution d'un ensemble d'instructions par une machine programmable telle qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC (« *Application Specific Integrated Circuit »* en anglais ou *Circuit Intégré Spécifique à une Application* en français).

La **Fig. 4** représente un exemple d'architecture d'un dispositif de génération d'un document électronique dans lequel la présente invention est implémentée.

Le dispositif de génération d'un document électronique tel que le serveur 30 comprend :
- un processeur, micro-processeur, ou microcontrôleur 400 ;
- une mémoire volatile 403 ;
- une mémoire non volatile 402;
- une caméra 405 ;
- un bus de communication 401 reliant le processeur 400 à la mémoire ROM 402, à la mémoire RAM 403 et à la caméra 405.

Le processeur 400 est capable d'exécuter des instructions chargées dans la mémoire volatile 403 à partir de la mémoire non volatile 402, d'une mémoire externe (non représentée), d'un support de stockage, tel qu'une carte SD ou autre, ou d'un réseau de communication. Lorsque le dispositif de génération d'un document électronique est mis sous tension, le processeur 400 est capable de lire de la mémoire volatile 403 des instructions et de les exécuter. Ces instructions forment un programme d'ordinateur qui cause la mise en oeuvre, par le processeur 400, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable telle qu'un DSP (« *Digital Signal Processor »* en anglais ou *Unité de Traitement de Signal Numérique* en français) ou un microcontrôleur, ou être implémenté sous forme matérielle par une machine ou un composant dédié, tel qu'un FPGA (« *Field Programmable Gate Array »* en anglais ou *Matrice de Portes Programmables sur le Terrain* en français) ou un ASIC (« *Application Specific Integrated Circuit »* en anglais ou *Circuit Intégré Spécifique à une Application* en français).

La **Fig. 5** représente un exemple d'algorithme de génération d'une séquence de codes à barres à deux dimensions selon la présente invention.

Le présent algorithme est décrit dans un exemple dans lequel il est exécuté par le processeur 400 du serveur 30. En variante, le présent algorithme est exécuté par le processeur 200 du dispositif de présentation d'un document électronique SM1.

A l'étape E51, le processeur 400 partitionne un document électronique signé numériquement à l'aide d'une clé privée en N partitions d'une taille prédéterminée. La taille prédéterminée correspond au nombre maximum d'octets que peut contenir un code à barres utilisé par la présente invention moins la place nécessaire à des données de type index et/ou un entête.

Il est à remarquer ici qu'en variante, le document électronique est préalablement à la partition chiffré.

A l'étape E52, le processeur 400 indexe chaque partition de manière à identifier l'ordre dans lequel les partitions doivent être réassemblées pour permettre la reconstruction du document électronique. L'indexation est par exemple effectuée en affectant un numéro n à chaque partition avec n=1 à N.A l'étape E53, le processeur 400 forme un entête qui comporte entre autres le nombre N de partition. L'entête peut comporter en outre le type de code à barres à deux dimensions utilisé pour les codes à barres suivants. En effet, le premier code à barres à deux dimensions peut être simple et robuste pour permettre une identification facile de l'entête et les codes à barres à deux dimensions suivants plus denses pour contenir une quantité d'information plus grande.

A l'étape E54, le processeur 400 forme un code à barres à deux dimensions pour chaque partition et son index. L'index est par exemple placé en première position dans les données de la partition. L'entête est inclue dans le code à barres à de dimensions formé à partir de la partition ayant le premier index ou un code à barre à deux dimension est formé pour l'entête seule et qui comporte l'index 0 par exemple. Le code à barres est par exemple un code QR.

Les écrans actuels des téléphones intelligents ayant une résolution au moins égale à 1080x1920 pixels, il serait possible d'afficher un code QR version 25 avec des pavés sur 8 pixels ce qui représente un bon compromis densité/lisibilité.

La même approche est envisageable avec un autre format de codage DataMatrix : celui-ci permet de coder, dans sa version 144 lignes par 144 colonnes, 1556 octets.

Les pavés seront un peu plus petits que dans le cas d'un code QR, de l'ordre de 7 pixels, mais de taille encore acceptable pour une lecture par une caméra d'un téléphone intelligent utilisé par l'agent de contrôle.

A l'étape E55, le processeur 400 adapte le temps d'affichage sur l'écran du dispositif de présentation d'un document électronique SM1.

Les caméras actuelles de téléphones intelligents ont une vitesse d'acquisition généralement de 30 images par seconde et les écrans de ces mêmes téléphones intelligents ont des vitesses de rafraîchissement de leur écran de l'ordre de 30 images par seconde. De façon à ne pas avoir de problème de synchronisation lors de la capture de la séquence de codes à barres à deux dimensions, il faut envisager de laisser chaque image de code-barres à deux dimensions au moins pendant un durée au moins égale à deux fois le temps d'affichage d'une image par le dispositif de présentation d'un document électronique SM1.

Selon un premier exemple de réalisation de la présente invention, chaque code à barres à deux dimensions est dupliqué au moins deux fois.

Selon un second exemple de réalisation, le processeur 400 détermine le temps d'affichage de chaque code à barres. Les caméras actuelles de téléphones intelligents ont une vitesse d'acquisition généralement de 30 images par seconde, de manière à ne pas avoir de problème de synchronisation, chaque code à barres à deux dimensions est affiché au moins pendant le temps d'acquisition de deux images. Le temps d'affichage de chaque code à barres à deux dimensions est alors égal à 66 millisecondes.

A l'étape E56, le processeur 400 insère un délimiteur entre chaque code à barres à deux dimensions.

Un délimiteur est par exemple, une image prédéterminée. L'image prédéterminée est par exemple une image noire ou blanche.

A l'étape E57, le processeur 400 forme une séquence de codes à barres à deux dimensions.

La séquence de codes à barres à deux dimensions comporte chaque code à barres à deux dimensions ainsi que les délimiteurs insérés.

En variante, la séquence de codes à barres à deux dimensions est mise dans un format vidéo et comporte le temps d'affichage de chaque code à barres.

La séquence de codes à barres à deux dimensions est mémorisée dans la mémoire vive 203 du dispositif de présentation d'un document électronique SM1.

La **Fig. 6** représente un exemple d'algorithme de transfert d'une séquence de codes à barres à deux dimensions selon la présente invention.

Le présent algorithme est décrit dans un exemple dans lequel celui-ci est exécuté par le processeur 200 du dispositif de présentation d'un document électronique SM1.

A l'étape E60, le processeur 200 détecte une requête d'activation du présent algorithme effectuée par le possesseur 10 du document électronique par l'intermédiaire de l'interface homme machine du dispositif de présentation d'un document électronique SM1.

A l'étape suivante E61, le processeur 200 lit dans la mémoire vive 203 du dispositif de présentation d'un document électronique SM1 la séquence de codes à barres à deux dimensions.

A l'étape suivante E62, le processeur 200 commande l'affichage de la séquence de codes à barres par l'écran 205 du dispositif de présentation d'un document électronique SM1.

Si la séquence de codes à barres à deux dimensions est mise dans un format vidéo, le processeur 200 commande l'affichage de la séquence de codes à barres à deux dimensions par l'écran 205 à un rythme correspondant au temps d'affichage de chaque code à barres. Les codes à barres de la séquence de codes à barres sont affichés les uns après les autres sur l'écran du dispositif de présentation d'un document électronique SM1.

Par exemple, la séquence de codes à barres à deux dimensions est affichée successivement au moins deux fois sur l'écran 205 du dispositif de présentation d'un document électronique SM1.

La **Fig. 7a** représente un premier exemple d'algorithme de capture et de traitement d'une séquence de codes à barres à deux dimensions selon la présente invention.

Le présent algorithme est décrit dans un exemple dans lequel celui-ci est exécuté par le processeur 300 du dispositif de lecture d'un document électronique SM2.

A l'étape E700, le processeur 300 active le dispositif de capture d'images 305.

Le dispositif de capture d'images 205 est activé tant que la totalité des codes à barres de la séquence de codes à barres à deux dimensions n'est pas décodée.

A l'étape E701, le processeur 300 recherche parmi les images capturées par le dispositif de capture d'image, un code à barres à deux dimensions qui est représentatif d'un entête en décodant les codes à barres à deux dimensions. Le processeur 300 obtient ainsi le nombre N des différents codes à barres à deux dimensions présents dans la séquence de codes à barres à deux dimensions.

A l'étape suivante E702, le processeur 300 identifie un marqueur dans la séquence de codes à barres capturés.

A l'étape suivante E703, le processeur 300 décode le code à barres à deux dimensions à la suite du marqueur détecté et mémorise le contenu de celui-ci et son index.

A l'étape E704, le processeur 300 vérifie si la totalité des codes à barres à deux dimensions a été capturée et décodée.

Par exemple, le processeur 300 vérifie si le nombre de codes à barres capturés et décodés est égal à N.

Dans la négative, le processeur 300 retourne à l'étape E702.

Dans l'affirmative, le processeur 300 passe à l'étape E705.

A l'étape E705, le processeur 300 déchiffre la signature à l'aide d'une clé publique.

A l'étape E705, le processeur 300 vérifie si la signature est correcte.

Dans la négative, le processeur 300 passe à l'étape E708 et commande l'affichage d'un message notifiant à l'agent de contrôle l'échec de la vérification de la signature.

Dans l'affirmative, le processeur 300 passe à l'étape E707 et commande l'affichage d'un message notifiant à l'agent de contrôle que la signature est correcte.

Eventuellement, le processeur 300 reconstruit le document électronique à l'aide des index et commande l'affichage du document électronique sur l'écran du dispositif de capture et de traitement d'une séquence de codes à barres à deux dimensions.

Si le document électronique a été préalablement chiffré, préalablement à l'affichage du document électronique, celui est déchiffré.

La **Fig. 7b** représente un second exemple d'algorithme de capture et de traitement d'une séquence de codes à barres à deux dimensions selon la présente invention.

Le présent algorithme est décrit dans un exemple dans lequel celui-ci est exécuté par le processeur 300 du dispositif de lecture d'un document électronique SM2.

A l'étape E750, le processeur 300 active le dispositif de capture d'images 305.

Par exemple, le dispositif de capture d'images 305 est activé pendant une durée prédéterminée.

La durée prédéterminée est par exemple comprise entre 0,6 secondes et 10 secondes.

A l'étape E751, chaque image capturée par le dispositif de capture d'images 205 est mémorisée dans la mémoire volatile 303.

A la fin de la durée prédéterminée, le processeur 300 passe à l'étape E752, recherche parmi les images capturées et mémorisées par le dispositif de capture d'image 305, un code à barres à deux dimensions qui est représentatif d'un entête en décodant les codes à barres à deux dimensions. Le processeur 300 obtient ainsi le nombre N des différents codes à barres à deux dimensions présents dans la séquence de codes à barres à deux dimensions.

A l'étape suivante E753, le processeur 300 identifie chaque marqueur dans la séquence de codes à barres mémorisés.

A l'étape suivante E754, le processeur 300 décode chaque code à barre à deux dimensions à la suite de chaque marquer identifié et mémorise le contenu de celui-ci et son index.

A l'étape E755, le processeur 300 déchiffre la signature à l'aide d'une clé publique.

A l'étape E756, le processeur 300 vérifie si la signature est correcte.

Dans la négative, le processeur 300 passe à l'étape E758 et commande l'affichage d'un message notifiant à l'agent de contrôle l'échec de la vérification de la signature.

Dans l'affirmative, le processeur 300 passe à l'étape E757 et commande l'affichage d'un message notifiant à l'agent de contrôle que la signature est correcte.

Eventuellement, le processeur 300 reconstruit le document électronique à l'aide des index et commande l'affichage du document électronique sur l'écran du dispositif de capture et de traitement d'une séquence de codes à barres à deux dimensions.

La **Fig. 8** représente une partie d'une séquence de codes à barres à deux dimensions selon la présente invention.

La partie de la séquence de codes à barres à deux dimensions comporte deux codes à barres à deux dimensions différents CB1 et CB2 séparés par des marqueurs Mk1 et Mk2.

Chaque code à barres à deux dimensions est dupliqué deux fois.

Les images de la séquence de codes à barres à deux dimensions sont affichées successivement sur l'écran du dispositif de présentation d'un document électronique.

Bien entendu, la présente invention n'est nullement limitée aux modes de réalisation décrits ici, mais englobe, bien au contraire, toute variante à la portée de l'homme du métier.

## Revendications

1. Procédé de vérification de la validité d'un document électronique, **caractérisé en ce que** le procédé comporte les étapes de :
- activation (E700) d'un dispositif de capture d'images et capture d'une séquence d'images affichée par un dispositif de présentation du document électronique, la séquence d'images étant constituée de différents codes à barres à deux dimensions affichés successivement les uns après les autres, les code à barres à deux dimensions étant représentatifs d'une signature du document électronique et de parties du document électronique,
- décodage des (E703) codes à barres à deux dimensions,
- vérification (E706) de la validité de la signature à l'aide d'une clé publique,
- génération (E707, E708) d'un message représentatif du résultat de la vérification.

2. Procédé selon la revendication 1, **caractérisé en ce que** la séquence d'image capturée comporte un code à barres à deux dimensions représentatif d'un entête comportant le nombre de codes à barres à deux dimensions représentatifs de la signature du document électronique et du document électronique.

3. Procédé selon la revendication 2, **caractérisé en ce que** chaque code à barres à deux dimensions est capturé au moins deux fois dans la séquence d'images.

4. Procédé selon l'une quelconque des revendications 1 à 3, **caractérisé en ce que** deux codes à barres différents sont séparés par une image non représentative d'un code à barres à deux dimensions.

5. Procédé selon l'une quelconque des revendications 1 à 4, **caractérisé en ce que** chaque code à barres à deux dimensions comporte un index permettant la reconstruction du document électronique.

6. Procédé selon l'une quelconque des revendications 1 à 5, **caractérisé en ce que** le dispositif de capture d'images est activé pendant une durée prédéterminée et le décodage est effectué à la fin de la durée prédéterminée.

7. Procédé selon l'une quelconque des revendications 2 à 5, **caractérisé en ce que** le dispositif de capture d'images est activé tant que le nombre de codes à barres à deux dimensions décodé est inférieur au nombre compris dans l'entête.

8. Procédé selon l'une quelconque des revendications 1 à 7, **caractérisé en ce que** le procédé comporte en outre une étape de déchiffrage du document électronique.

9. Dispositif de vérification de la validité d'un document électronique, **caractérisé en ce que** le dispositif comporte :
- des moyens d'activation d'un dispositif de capture d'images et capture d'une séquence d'images affichée par un dispositif de présentation du document électronique, la séquence d'images étant constituée de différents codes à barres à deux dimensions affichés successivement les uns après les autres, les code à barres à deux dimensions étant représentatifs d'une signature du document électronique et de parties du document électronique,
- des moyens de décodage des codes à barres à deux dimensions,
- des moyens de vérification de la validité de la signature à l'aide d'une clé publique,
- des moyens de génération d'un message représentatif du résultat de la vérification.
